(19) Europäisches Patentamt
European Patent Office
Office européen des brevets

(11) **EP 1 612 991 B1**

(12) **FASCICULE DE BREVET EUROPEEN**

(45) Date de publication et mention
de la délivrance du brevet:
**22.04.2009 Bulletin 2009/17**

(51) Int Cl.:
*H04L 9/32* *(2006.01)*  *G07C 13/00* *(2006.01)*

(21) Numéro de dépôt: **05291364.7**

(22) Date de dépôt: **24.06.2005**

(54) **Procédé et système de vote électronique en réseau à haute sécurité**

Elektronisches Wahlverfahren und -system in einem Hochsicherheitskommunikationsnetz

Electronic voting method and corresponding system in a high security network

(84) Etats contractants désignés:
**AT BE BG CH CY CZ DE DK EE ES FI FR GB GR HU IE IS IT LI LT LU MC NL PL PT RO SE SI SK TR**

(30) Priorité: **30.06.2004 FR 0407267**

(43) Date de publication de la demande:
**04.01.2006 Bulletin 2006/01**

(73) Titulaire: **FRANCE TELECOM**
**75015 Paris (FR)**

(72) Inventeurs:
• **Vernay, Francois**
**38000 Grenoble (FR)**
• **Traore, Jacques**
**61100 Saint Georges des Groseillers (FR)**
• **Bonamour, Antoine**
**38000 Grenoble (FR)**

(74) Mandataire: **Loisel, Bertrand et al**
**Cabinet Plasseraud**
**52 rue de la Victoire**
**75440 Paris Cedex 09 (FR)**

(56) Documents cités:
**US-A1- 2002 019 767**    **US-A1- 2002 138 341**

• **FUJIOKA A ET AL: "A PRACTICAL SECRET VOTING SCHEME FOR LARGE SCALE ELECTIONS" ADVANCES IN CRYPTOLOGY - PROCEEDINGS OF THE AUSCRYPT WORKSHOP ON THE THEORY AND APPLICATION OF CRYPTOGRAPHIC TECHNIQUES, 1992, pages 244-251, XP000572977**

**Description**

L'invention concerne un procédé et un système de vote électronique en réseau à haute sécurité.

Les procédés et systèmes de vote automatisé ont été l'objet d'études approfondies en raison des implications psychologiques, humaines et politiques qui leur sont associées et des solutions techniques permettant de résoudre les problèmes posés par ces dernières.

Selon un premier type de ces procédés et systèmes, l'identité de l'électeur votant est contrôlée manuellement. Ce contrôle donne accès au système de vote électronique, qui n'a alors plus qu'à gérer un acheminement fiable d'un bulletin de vote électronique vers une machine de comptage de voix.

Un premier type précité correspond sensiblement à celui décrit par la demande de brevet US 2003208395 dans lequel un bulletin de vote électronique, constitué par exemple par une mini application (« applet »), est chargé par l'électeur votant sur sa machine, les opérations de délivrance du bulletin de vote électronique, de contrôle de l'identité de l'électeur votant et la réception du bulletin de vote électronique émis par ce dernier étant effectuées par le même serveur. Le mode d'authentification est de type biométrique.

Le procédé et le système décrits par la demande de brevet précitée permettent la mise en oeuvre d'un processus d'authentification forte de l'électeur votant, au prix toutefois d'un déplacement physique de ce dernier. En outre, l'électeur votant ne peut obtenir la certitude que son bulletin électronique est arrivé à destination, jusqu'à l'urne électronique.

Selon un deuxième type de ces procédés et systèmes, ceux-ci permettent d'organiser, conduire et contrôler un scrutin en utilisant l'INTERNET. En général, les procédés et systèmes mettent en oeuvre des messages transmis sur INTERNET, ces messages appelés mix-net, étant obtenus par brassage ou mélange des données.

Un tel processus est, par exemple, décrit par la demande de brevet EP 1 374 188, dans laquelle un mix-net amélioré est engendré.

Dans les systèmes précités, si les modules de brassage ou mélange utilisent des techniques, telles que le chiffrement efficace, il est alors difficile de certifier l'intégrité des données en sortie de traitement. Si, toutefois, un moyen de contrôle de l'intégrité des données est introduit, alors le mélange obtenu est réversible, ce qui dégrade le niveau de sécurité et de confidentialité des données transmises.

Selon un troisième type de ces procédés et systèmes, ces derniers utilisent des machines dédiées équipées de moyens d'authentification forte et interconnectées sur un réseau virtuel. Ce dernier type offre une sécurité optimale, basée sur le processus d'authentification forte de l'électeur votant, certificat d'authentification de niveau 3, l'usage de réseaux privés virtuels, très difficile à investir, et de bornes de vote.

La demande de brevet US 2002 138341 décrit un procédé et un système comparables à ceux du troisième type précités, tout au moins pour ce qui concerne l'utilisation de messages mix-net, un processus d'authentification forte, par certificat X 509, fichier texte contenant des informations relatives à une personne physique, signées et chiffrées, le bulletin de vote électronique étant en outre chiffré par chiffrement hybride.

Le système décrit dans le document précité met en outre en oeuvre plusieurs serveurs.

Toutefois, le système et le procédé précités ne proposent pas de solution satisfaisante relativement au critère de confiance dans les administrateurs de ces serveurs.

En effet, dans le système et le procédés décrits dans ce document, les bulletins signés électroniquement par l'électeur votant passent par une première machine qui vérifie la signature électronique de ce dernier et la remplace par une signature spécifique, propre à la première machine, avant de transmettre le bulletin de vote électronique nouvellement signé à l'urne électronique.

Cette première machine, jouant le rôle de médiateur de transactions, sinon de tiers de confiance, conserve toutefois toute latitude avant de glisser ou non le bulletin de vote électronique dans l'urne électronique, de lever l'anonymat.

En outre l'électeur votant reçoit un bulletin de vote blanc et l'authentification de l'identité de ce dernier vaut autorisation de vote, sans autre contrôle. Le bulletin de vote électronique chiffré est lié à l'électeur votant, au moins sur la première machine, et chiffré avec une date.

Le processus de chiffrement daté précité permet de se prémunir contre la recopie de bulletins de vote électroniques interceptés de manière illicite mais il présente en contrepartie le risque de permettre l'exécution de recoupements significatifs.

La problématique posée par la mise en oeuvre de procédés et de systèmes de vote électronique en réseau appliquée à l'INTERNET par l'intermédiaire de processus d'authentification faible respectivement forte peut être résumée ci-après.

Lorsque, pour des raisons de coût des matériels et de complexité de logistique de mise en place du vote, les organisateurs retiennent un vote électronique par l'INTERNET à authentification faible, ils prennent globalement le risque d'une sécurité du système faible sur au moins trois plans :

■ Les serveurs peuvent être victimes de dénis de service. Les électeurs peuvent participer, parfois involontairement s'ils sont victimes de virus informatiques, à de tels dysfonctionnements.

■ Les électeurs votants de leur côté sont obligés de faire confiance aux prestataires de services qui gèrent les machines de vote pour ce qui concerne tant le respect de leur anonymat que la sincérité du scrutin.

■ Des utilisateurs mal intentionnés peuvent utiliser le code placé sur leur machine pour les aider à accomplir leur vote mais tenter de porter atteinte à la crédibilité du vote.

Le schéma d'architecture la plus rudimentaire d'un système de vote électronique en réseau à authentification faible est le suivant :

■ l'électeur votant est informé de l'adresse du serveur de vote électronique, par un média quelconque (courrier, courriel, presse...).

■ l'électeur votant se connecte, le jour de la votation, à partir d'un terminal, d'une machine ou autre au serveur de vote grâce à l'adresse du serveur de vote communiquée.

■ le serveur de vote contrôle les droits à voter de l'électeur votant, renvoie un bulletin de vote électronique « blanc » à ce dernier, qui le remplit, le retourne au serveur de vote, lequel le comptabilise ou non à titre de voix exprimée, avec les autres bulletins de vote électronique.

Le schéma précité permet de mettre en évidence les risques réellement encourus sur les plans suivants :

■ Anonymat : l'électeur votant doit s'identifier pour que son droit à voter soit vérifié. Si les communications sont interceptées et épiées, il est possible de savoir pour qui vote l'électeur votant. Les communications doivent donc être chiffrées. Afin de produire un degré de confiance dans le système, indépendamment de la confiance que les électeurs peuvent placer dans l'administrateur du système, il faut utiliser au moins deux serveurs distincts, un serveur administrateur de vote, pour contrôler les droits au vote et authentifier l'électeur votant et un serveur de comptage des voix, pour décompter les bulletins.

Seule une collusion entre les administrateurs des deux serveurs est susceptible de permettre de lever l'anonymat. On indique toutefois que la problématique précitée se pose à toute autorité organisant la votation, même sous la forme papier classique de cette dernière.

En général, la plupart des systèmes multiserveurs sont configurés de façon que les différents administrateurs directement liés ou non aux personnes intéressées aux résultats de la votation se surveillent les uns les autres.

■ Secret du résultat jusqu'à la fin du scrutin :
Même si les communications sont chiffrées au niveau du réseau, si l'administrateur du serveur de comptage de voix n'est pas honnête, ce dernier peut connaître les résultats avant la clôture du scrutin. Il est donc nécessaire de procéder à un chiffrement au niveau de l'application de décompte des voix, avec des clés de déchiffrement qui ne sont révélées qu'après la fin du scrutin.

■ Sécurité :
Si les machines des serveurs ne sont pas suffisamment protégées, un intrus malveillant peut s'introduire et provoquer des dégâts.

■ Sincérité :
Le risque de bourrage d'une urne électronique est important. La puissance des matériels et logiciels informatiques est telle que la découverte ou la révélation d'une faille permet à tout sachant d'utiliser cette dernière à vaste échelle.

L'usage de certificats et de signatures électroniques permet de s'affranchir du risque précité.

Certains systèmes répondant aux contraintes précitées ont déjà été proposés. C'est en particulier le cas des infrastructures PKI, supportant l'utilisation de cryptographie à clé publique, grâce à des systèmes générateurs de paires de clés publique-privée, afin de permettre une protection de l'accès à la clé privée, secrète par définition, laquelle ne peut être utilisée que par l'individu, électeur votant, dont l'identité a été associée à cette clé privée.

Installer une infrastructure PKI à grande échelle, un scrutin peut compter plus de trente millions d'électeurs, est encore à l'heure actuelle difficile et fournir des kiosques sécurisés en nombre suffisant implique des coûts financiers importants.

Les systèmes de vote électronique sur l'INTERNET ont pour objet de simplifier l'organisation des scrutins et de diminuer les coûts et ne peuvent donc facilement faire appel à de telles infrastructures.

Lorsque, au contraire, ces mêmes organisateurs retiennent une infrastructure fortement sécurisée, le coût et la complexité de mise en oeuvre sont d'autant moins adaptés à des expérimentations puis à une généralisation d'usage.

Seule une volonté politique forte, un couplage avec d'autres développements structurants, tels que la carte d'identité électronique, et une collaboration étroite entre plusieurs acteurs concernés dans le pays considéré, permettant une réutilisation de ces infrastructures dans des circonstances semblables à celles d'une votation, mais non nécessairement liées à ce type d'évènement, permettraient d'envisager un déploiement d'une telle infrastructure.

Si dans une telle situation, ces organisateurs font appel à un système de vote électronique moins sécurisé, le risque de perte de confiance des électeurs est énorme, ce qui ne peut être aucunement accepté, en raison du risque de discrédit de ces organisateurs voire de la classe politique, acceptant de tels systèmes.

Par ailleurs, un système de vote électronique est décrit dans le document « A practical secret voting scheme for large scale elections » par Fujiok A et Al., Advances in cryptology - Proceedings of the auscrypt workshop on the theory and application of cryptographic techniques, 1992, pages 244-251, XP000572977.

La présente invention a pour objet de remédier à l'ensemble des inconvénients et limitations des procédés et systèmes de vote électronique actuels, lesquels obligent notamment les électeurs à faire confiance aux administrateurs techniques du vote.

En particulier, la présente invention a pour objet un procédé et un système de vote électronique en réseau dont la structure soit en mesure de permettre de garantir une répartition des responsabilités entre plusieurs acteurs administrateurs, lesquels, sauf entente illicite de ces derniers, ne pourront porter atteinte à l'intégrité du scrutin, sans que les tentatives de fraude correspondantes ne soient dévoilées.

En outre, la présente invention a pour objet de fournir un procédé et un système de vote simple, ne nécessitant pas l'utilisation d'un système d'authentification complexe, mais présentant toutefois un haut degré de sécurité.

La présente invention a également pour objet de fournir un procédé et un système permettant de se prémunir contre toute tentative de discrédit du processus de votation, par la suppression de toute possibilité de tentatives consistant à déposer, sous une identité donnée, un bulletin de vote électronique signé sous une autre identité, dans le but de créer des divergences entre la liste des électeurs qui ont réellement pris part au vote et la liste des électeurs qui ont signé un registre de contrôle.

La présente invention a enfin pour objet la mise en oeuvre d'un procédé et d'un système de vote électronique permettant d'introduire un processus de droit à signer le registre électoral électronique de l'électeur qui a pris part au vote et a donc réellement voté.

L'invention a pour objet un procédé de vote électronique selon la revendication 1.

L'invention a également pour objets un système de vote électronique selon la revendication 9, un serveur administrateur selon la revendication 10, et un serveur de comptage de voix selon la revendication 18.

D'autres caractéristiques de l'invention sont énoncées dans les revendications dépendantes.

Le procédé et le système de vote électronique en réseau objets de la présente invention trouvent application à l'organisation de votations politiques, de sondages publics ou privés auprès de particuliers, dans des conditions d'authenticité et de confidentialité optimales, pour des coûts de développement et/ou de déploiement sensiblement réduits.

Ils seront mieux compris à la lecture de la description et à l'observation des dessins dans lesquels :

- la figure 1 a représente, à titre illustratif, un organigramme des étapes essentielles de mise en oeuvre du procédé de vote électronique en réseau objet de la présente invention ;
- les figures 1b et 1c représentent, à titre illustratif, un organigramme détaillé de mise en oeuvre d'étapes spécifiques du procédé objet de la présente invention, tel que représenté en figure 1 a ;
- la figure 2 représente, à titre illustratif, un schéma général d'une architecture d'un système de vote électronique en réseau conforme à l'objet de la présente invention ;
- la figure 3 représente, à titre illustratif, une architecture, sous forme de schémas blocs, selon une variante préférentielle, d'un système de vote électronique en réseau conforme à l'objet de la présente invention ;
- la figure 4a représente, à titre illustratif, un détail de mise en oeuvre d'une session de vote électronique par un utilisateur, utilisant un système de vote électronique conforme à l'objet de la présente invention, tel que représenté en figure 3 ;
- la figure 4b représente, à titre illustratif, un détail de mise en oeuvre d'une succession d'étapes ou d'un protocole par l'architecture d'un système de vote électronique tel que représenté en figure 3.

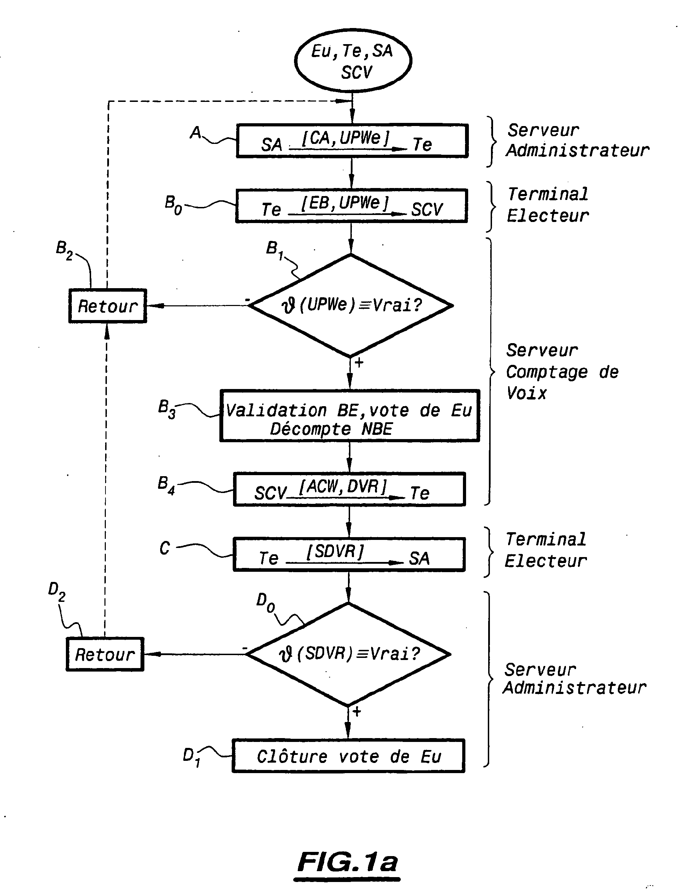

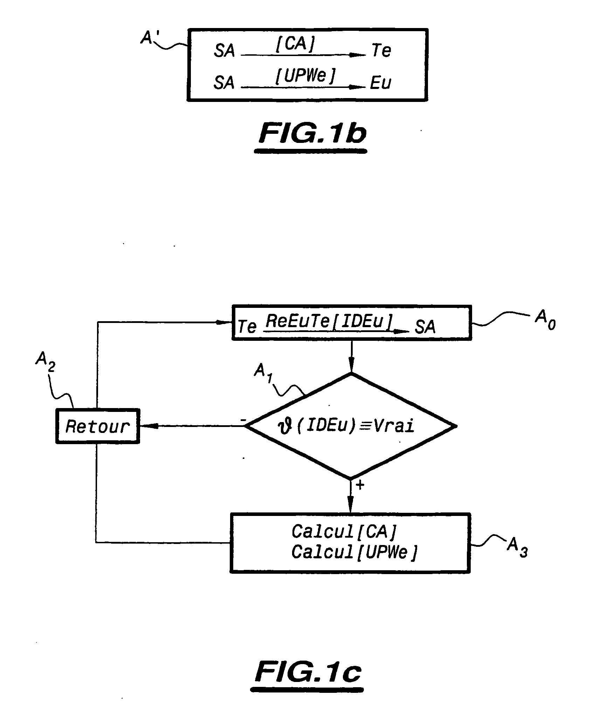

Une description plus détaillée du procédé de vote électronique en réseau à haute sécurité objet de la présente invention sera maintenant donnée en liaison avec la figure 1 a et les figures suivantes.

Le procédé de vote électronique en réseau objet de la présente invention est mis en oeuvre entre un électeur utilisateur Eu d'un terminal électeur Te connecté en réseau à au moins un serveur administrateur SA et à un serveur de comptage de voix SCV.

D'une manière générale, on indique que le terminal électeur Te peut être constitué par un terminal de type varié, tel qu'un ordinateur personnel connecté sur Internet, un kiosque spécifique installé dans un bureau de vote et connecté à l'Internet ou encore par un kiosque dans un lieu public quelconque également connecté à l'Internet et en particulier, au serveur administrateur SA et au serveur de comptage de voix SCV précités, ainsi qu'il sera décrit ultérieurement dans la description.

Selon un aspect remarquable du procédé objet de la présente invention, celui-ci consiste au moins en une étape A à calculer et transmettre du serveur administrateur SA à l'électeur utilisateur Eu et au terminal électeur Te un certificat d'authentification CA respectivement un mot de passe à usage unique dédié à cet électeur, ce mot de passe à usage unique étant noté UPWe.

Les opérations de calcul et de transmission de l'étape A sont symbolisées par la relation

$$ SA \xrightarrow{[CA, UPWe]} Te $$

D'une manière générale, on indique que la symbolisation des données transmises dans les messages représentée entre crochets, ainsi que représenté dans la relation précédente, correspond à une transmission de ces données de manière chiffrée avec un degré de chiffrement qui sera explicité ultérieurement dans la description.

On comprend bien entendu que le mot de passe à usage unique notamment UPWe est transmis à l'électeur utilisateur Eu et/ou au terminal électeur Te sous forme chiffrée afin d'éviter tout risque de percement et d'utilisation frauduleuse de ce dernier par un tiers.

Les conditions de calcul et de transmission du certificat d'authentification CA respectivement du mot de passe à usage unique UPWe seront explicitées ultérieurement dans la description.

L'étape A précitée est alors suivie d'une étape $B_0$ consistant à transmettre du terminal électeur Te au serveur de comptage de voix SCV un bulletin de vote électronique, noté EB, choisi par l'électeur utilisateur Eu, accompagné du mot de passe à usage unique UPWe dédié à cet électeur.

L'étape $B_0$ de la figure 1a représente, à titre purement illustratif, la transmission par le terminal électeur Te du bulletin de vote électronique EB et du mot de passe à usage unique UPWe et la réception de ces derniers selon la forme symbolique

$$ Te \xrightarrow{[EB, UPWe]} SCV $$

L'opération de transmission $B_0$ précitée et de réception par le serveur de comptage de voix SCV est alors suivie d'une étape consistant, au niveau du serveur de comptage de voix, à vérifier à la valeur vraie la valeur du mot de passe à usage unique dédié UPWe en une étape $B_1$.

Sur réponse positive à l'étape de vérification $B_1$, le procédé objet de l'invention consiste à valider le bulletin de vote électronique EB et le vote électronique de l'électeur utilisateur Eu afin de décompter ce bulletin de vote électronique en fonction de la valeur faciale de ce dernier.

De manière classique, la valeur faciale du bulletin de vote électronique peut être constituée par une valeur faciale correspondant à un bulletin valide fonction du choix de l'électeur utilisateur, un bulletin blanc ou un bulletin nul par exemple, selon l'exception classique, propre au contenu des bulletins.

En référence à la figure 1a, on indique que, sur réponse négative au test de vérification $B_1$, une étape $B_2$ de retour peut être prévue pour réinitialiser le processus à l'étape A et le cas échéant, tenter de réinitialiser le processus pour le même terminal électronique Te et le même électeur utilisateur Eu pour un nombre limité de tentatives toutefois.

Au contraire, sur réponse positive aux tests de vérification $B_1$, la validation du bulletin de vote électronique EB et du vote électronique est représentée à l'étape $B_3$, cette opération entraînant le décompte du bulletin électronique exprimé, conformément à la valeur faciale de ce dernier.

L'étape $B_3$ de validation du bulletin électronique et du vote électronique peut alors être suivie d'une étape $B_4$ consistant à transmettre du serveur de comptage de voix SCV au terminal électeur Te un accusé de réception ACW et un document de registre électoral électronique, noté DVR.

Sur la figure 1a, l'étape de transmission de l'accusé de réception et du document de registre électoral est notée de manière symbolique

$$ SCV \xrightarrow{[ACW, DVR]} TE $$

L'étape $B_4$ peut alors avantageusement être suivie d'une étape C consistant à calculer et transmettre du terminal électeur Te au serveur administrateur SA un document de registre électoral signé électroniquement par l'utilisateur, ce document étant noté SDVR.

L'opération de transmission du terminal électeur Te au serveur administrateur SA est noté symboliquement

$$Te \xrightarrow{[SDVR]} SA$$

Suite à la réception du document de registre électoral signé électroniquement SDVR, le serveur administrateur SA procède alors à une étape de vérification Do à la valeur vraie du document de registre électoral signé SDVR. Cette opération est notée symboliquement :

$$\mathcal{V}\ (SDVR) = vrai.$$

Sur réponse négative au test $D_0$, une étape de retour $D_2$ à l'étape A peut être réalisée pour effectuer une ou plusieurs tentatives nouvelles de vote accordé à l'électeur utilisateur Eu en nombre limité toutefois.

Au contraire, sur réponse positive au test $D_0$ de vérification à la valeur vraie du document de registre électoral signé, le serveur administrateur SA procède à la clôture de l'opération de vote de l'électeur utilisateur Eu du terminal électeur Te.

Le procédé de vote électronique en réseau à haute sécurité objet de la présente invention apparaît particulièrement remarquable dans la mesure où le mot de passe à usage unique UPWe peut être calculé comme une valeur unique pour chaque électeur utilisateur Eu.

Après clôture du vote de Eu ou après retour aux étapes $B_2$ et $D_2$ à l'étape A auprès du serveur administrateur, ce dernier procède à la radiation du mot de passe à usage unique et à la destruction de ce dernier par exemple.

Selon un aspect particulièrement avantageux du procédé objet de l'invention, ainsi qu'illustré en figure 1b, les opérations consistant à calculer et transmettre, du serveur administrateur SA au terminal électeur Te et à l'électeur utilisateur Eu, un certificat d'authentification CA respectivement un mot de passe à usage unique UPWe lié à cet électeur sont de préférence non simultanées.

Le caractère non simultané des deux opérations précitées est représenté en figure 1b par les relations symboliques successives :

$$SA \xrightarrow{[CA]} Te$$

$$SA \xrightarrow{[UPWe]} Eu$$

Le caractère non simultané des opérations précitées de transmission permet de réduire le risque d'interception d'un message unique et en particulier, le risque d'association du mot de passe à usage unique UPWe au certificat d'authentification CA transmis non simultanément.

Bien entendu, l'étape A de la figure 1a peut être exécutée de manière classique, l'étape précitée consistant à calculer et à transmettre du serveur administrateur SA au terminal électeur Te le certificat d'authentification CA puis le mot de passe à usage unique UPWe étant avantageusement exécutée sur requête d'autorisation de prendre part au vote de l'électeur utilisateur Eu, à partir du terminal électeur Te.

La requête d'autorisation précitée comporte au moins des données d'identification personnelle de l'électeur Eu et le certificat d'authentification est calculé et transmis sur vérification à la valeur vraie des données d'identification personnelles par le serveur administrateur.

Les opérations correspondantes sont représentées en figure 1c où l'étape $A_0$ désigne et représente de manière symbolique la transmission de la requête selon la relation symbolique :

$$Te \xrightarrow{ReEuTe[IDEu]} SA.$$

Le serveur administrateur SA met alors en oeuvre une étape de test $A_1$ de vérification à la valeur vraie des données d'identification utilisateur IDEu, après déchiffrement de ces dernières, bien entendu.

Sur réponse négative à l'étape de test $A_1$, un retour $A_2$ à l'étape $A_0$ peut être prévu, cette opération de retour étant comparable aux opérations de retour $B_2$ et $D_2$ représentées en figure 1a.

Au contraire, sur réponse positive à l'étape de test A1, les données d'identification personnelles IDEu de l'électeur utilisateur étant vérifiées à la valeur vraie, l'opération de calcul du certificat d'authentification CA puis de calcul du mot de passe à usage unique UPWe peut alors être exécutée à l'étape $A_3$.

Ainsi qu'il a été représenté en figure 1c, les opérations consistant à calculer et transmettre le mot de passe à usage unique UPWe dédié à l'électeur Eu et l'opération de transmission de ce dernier sont exécutées conditionnellement à la vérification à la valeur vraie des données d'identification personnelle IDEu de l'électeur utilisateur Eu par le serveur administrateur SA.

En outre, cette opération est de préférence réalisée suite à la transmission du certificat d'authentification CA conformément au mode de mise en oeuvre représenté à l'étape A', variante de réalisation de l'étape A à la figure 1b.

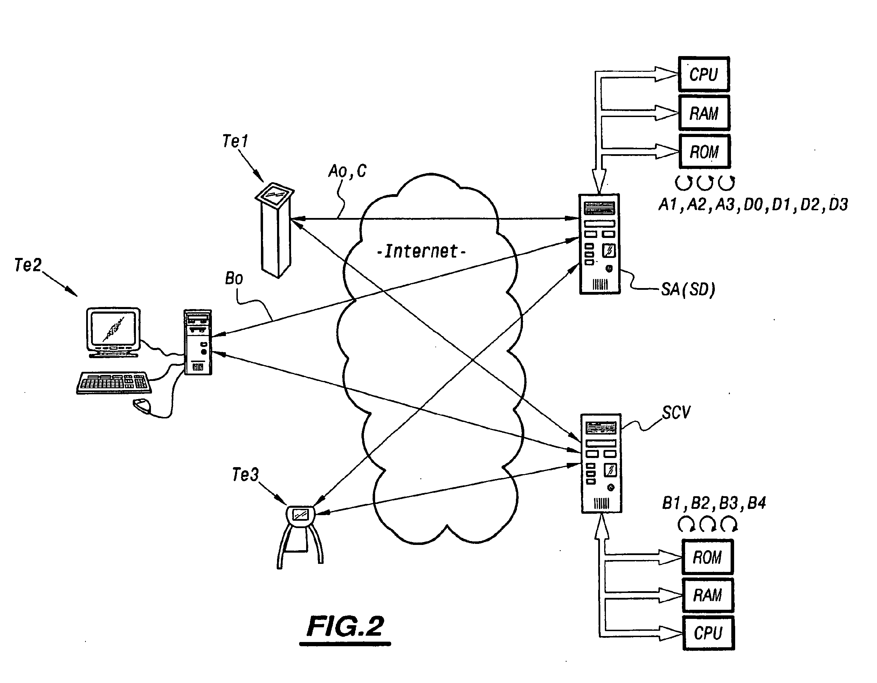

Une représentation schématique d'une architecture comportant différents types de terminaux électeurs $Te_1$, $Te_2$, $Te_3$ interconnectés par l'Internet à un serveur administrateur SA et à un serveur de comptage de voix SCV est représentée en figure 2.

Sur la figure 2 précitée, les étapes du procédé de vote électronique conforme à l'objet de la présente invention sont représentées mises en oeuvre au niveau de chacun des acteurs précités.

A titre d'exemple non limitatif, on indique que le terminal électeur $Te_1$ peut être constitué par un kiosque dédié en bureau de vote, le terminal électeur $Te_2$ peut être constitué par un ordinateur personnel installé chez un particulier électeur utilisateur et le terminal électeur $Te_3$ peut être constitué par un kiosque installé dans un lieu public non dédié spécifiquement à un vote.

Les opérations sont conduites conformément au procédé objet de l'invention, à partir des deux serveurs, serveur administrateur SA et serveur de comptage de voix SCV, ainsi que mentionné et décrit précédemment dans la description.

Le procédé et le système de vote électronique en réseau à haute sécurité objet de la présente invention permettent, grâce à l'utilisation d'un mot de passe à usage unique, d'obtenir un grand niveau de sécurité relatif à l'exécution du vote en toute intégrité et en l'absence de risque de fraude par les tiers.

Toutefois, afin de se prémunir de tout risque de manipulation et/ou de fraude susceptible d'être exécutée par une entité responsable de l'organisation du vote, le système objet de la présente invention et le procédé correspondant peuvent être exécutés, de manière particulièrement avantageuse, à partir d'un serveur dédié ayant au moins pour fonction de calculer et transmettre le mot de passe à usage unique, ce serveur dédié étant indépendant du serveur administrateur proprement dit et du serveur de comptage de voix précédemment décrit en liaison avec la figure 2.

Bien entendu, le serveur dédié calcule un mot de passe à usage unique UPWe et un seul associé à l'électeur utilisateur.

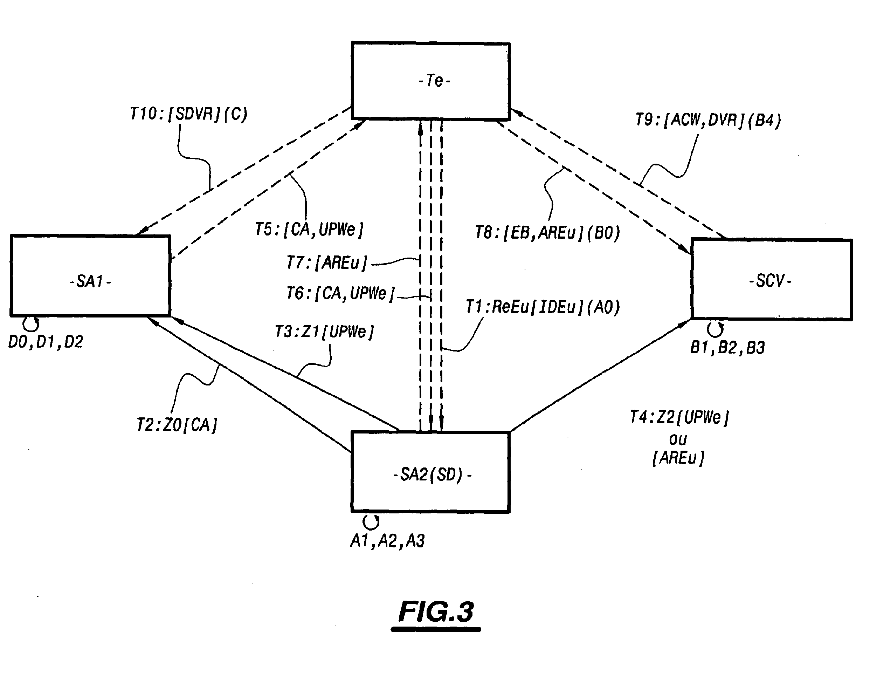

Une architecture correspondante d'un système de vote électronique en réseau à haute sécurité conforme à l'objet de la présente invention comportant en particulier un serveur dédié SD indépendant du serveur administrateur et du serveur de comptage de voix est représentée en figure 3.

D'une manière générale, on indique que pour mettre en oeuvre l'architecture représentée en figure 3, dans laquelle le calcul et la transmission du mot de passe à usage unique sont effectués à partir d'un serveur dédié, on peut considérer en quelque sorte le dédoublement du serveur administrateur SA représenté en figure 2 en un premier serveur administrateur $SA_1$ et un deuxième serveur administrateur $SA_2$ jouant le rôle du serveur dédié SD, seul autorisé à calculer et transmettre et traiter le mot de passe à usage unique UPWe.

On comprend, en particulier, que le premier serveur administrateur $SA_1$ et le deuxième serveur $SA_2$ jouant le rôle de serveur dédié peuvent alors se voir attribuer des tâches respectives bien définies, lesquelles seront explicitées ci-après.

Ainsi que représenté sur la figure 3, le serveur dédié $SA_2$(SD), deuxième serveur administrateur, peut avantageusement mettre en oeuvre les étapes $A_1$, $A_2$, $A_3$ représentées en figure 1 a et 1 c avec, en outre le calcul, la transmission et le traitement du mot de passe à usage unique UPWe pour lequel ce serveur est seul compétent.

Le premier serveur administrateur $SA_1$ peut alors être dédié à l'administration proprement dite des listes électorales et à la gestion de la clôture du vote par exemple pour exécuter les opérations $D_0$, $D_1$ et $D_2$ représentées en figure 1a.

Selon un aspect particulièrement remarquable du système de vote électronique en réseau à haute sécurité objet de l'invention, on indique que les échanges de messages entre chaque serveur administrateur, premier serveur administrateur $SA_1$, deuxième serveur administrateur $SA_2$ jouant le rôle de serveur dédié SD et le serveur de comptage de voix SCV sont effectués chacun suite à un protocole d'authentification réussie à très haut degré de sécurité représenté par une flèche en traits continus entre ces entités.

Le protocole d'authentification utilisé peut correspondre, à titre d'exemple non limitatif, à un protocole d'authentification à divulgation de connaissance nulle, les différents messages transmis bien entendu sous forme chiffrée entre premier, deuxième serveur administrateur jouant le rôle de serveur dédié et serveur de comptage de voix SCV étant chiffrés avec un très haut degré de sécurité, mais transmis suite à l'opération d'authentification réussie précédemment mentionnée.

Enfin, les transactions ou échanges de messages entre le terminal électeur Te, ou chaque terminal électronique $Te_1$ à $Te_3$ représenté en figure 2, et le premier serveur administrateur $SA_1$, le deuxième serveur administrateur $SA_2$ et le serveur de comptage de voix SCV sont représentés par des flèches en traits mixtes illustrant des transactions par messages chiffrés avec un degré de chiffrement de haute sécurité.

La succession des étapes mises en oeuvre par le procédé de vote électronique en réseau objet de l'invention et représentée en figure 1 a à 1 c est alors donnée ci-après selon les références temporelles et spatiales entre les différents acteurs terminal électeur Te, premier serveur administrateur $SA_1$, deuxième serveur administrateur $SA_2$ jouant le rôle de serveur dédié SD et serveur de comptage de voix SCV.

| | |
|---|---|
| T1 : | ReEu[IDEu] |
| T2 : | $Z_0$[CA] |
| T3 : | $Z_1$[UPWe] |
| T4 : | $Z_2$[UPWe] |
| T5 : | [CA, UPWe] |
| T6 : | [CA, UPWe] |
| T7 : | [AREu] |
| T8 : | [EB,UPWe] |
| T9 : | [ACW,DVR] |
| T10 : | [SDVR] |

Dans le tableau précédent, on rappelle que toutes les transactions $Z_0$ à $Z_2$ entre les serveur administrateur et serveur de comptage de voix désignent la transmission d'un message chiffré, la transaction entre ces éléments ayant satisfait à un protocole d'authentification forte réussie, ainsi que mentionné précédemment dans la description.

Ceci permet en particulier d'assurer l'indépendance et l'intégrité des transactions entre les différents acteurs soumis en totalité ou partie à l'autorité d'un administrateur de la votation.

Enfin, en ce qui concerne les opérations de transmission du serveur administrateur et en particulier du deuxième serveur administrateur $SA_2$ jouant le rôle de serveur SD à l'électeur Eu et au terminal électeur Te, du certificat d'authentification et du mot de passe à usage unique UPWe à cet électeur, on indique que les opérations peuvent, de manière particulièrement avantageuse, être effectuées par l'intermédiaire de canaux de transmission distincts.

En ce qui concerne la transmission du certificat d'authentification CA, ainsi que représenté à l'étape A' de la figure 1b notamment, on indique que la transmission précitée peut être effectuée par le réseau Internet suite à la transmission de la requête d'autorisation de vote à l'étape $T_1$ représentée au tableau du terminal électronique Te vers le serveur dédié, deuxième serveur administrateur $SA_2$.

Au contraire, la transmission du mot de passe à usage unique UPWe, peut être effectuée par un canal de transmission totalement distinct tel que par exemple un service de messagerie, un courriel, ou le cas échéant, un courrier transmis nommément à l'électeur utilisateur Eu préalablement à la date de la votation.

En particulier, on indique que la transmission du mot de passe à usage unique par l'intermédiaire d'un message court, désigné SMS, peut avantageusement être envisagée car l'électeur utilisateur EU dispose dans ce cas d'un téléphone mobile, par exemple, dont l'accès est protégé par le code d'identification de l'appareil dont l'électeur utilisateur a seul la maîtrise.

Lorsque la transmission du mot de passe à usage unique UPWe au terminal utilisateur Te ou à l'électeur utilisateur Eu a été effectuée, T5 : [CA, UPWe], l'électeur utilisateur Eu se connecte, le jour du vote, au deuxième serveur administrateur, $SA_2$(SD), serveur dédié, T6 : [CA, UPWe] pour présenter son certificat d'authentification CA et son mot de passe à usage unique UPWe. Le deuxième serveur administrateur, $SA_2$(SD), seul habilité à traiter le mot de passe à usage unique UPWe, procède après vérification du couple CA, UPWe au calcul d'une référence anonyme à l'électeur utilisateur, AREu, laquelle est transmise T7 : [AREu] au terminal électeur Te.

La référence anonyme à l'électeur utilisateur AREu peut consister en une valeur numérique obtenue à partir d'une fonction de hachage, ainsi qu'il sera décrit ultérieurement dans la description.

Le terminal utilisateur Te se connecte ensuite un serveur de comptage de voix, SCV, et transmet à ce dernier T8 : [EB, AREu] son bulletin de vote électronique EB et la référence anonyme à l'électeur utilisateur AREu. Le processus est poursuivi suite aux opérations de validation du bulletin de vote et du vote par les opérations de transmission d'accusé de réception et de document de registre électoral T9: [ACW,DVR] puis de transmission du document de registre électoral signé SDVR par la transaction T10 : [SDVR] du terminal électeur Te au premier serveur administrateur $SA_1$.

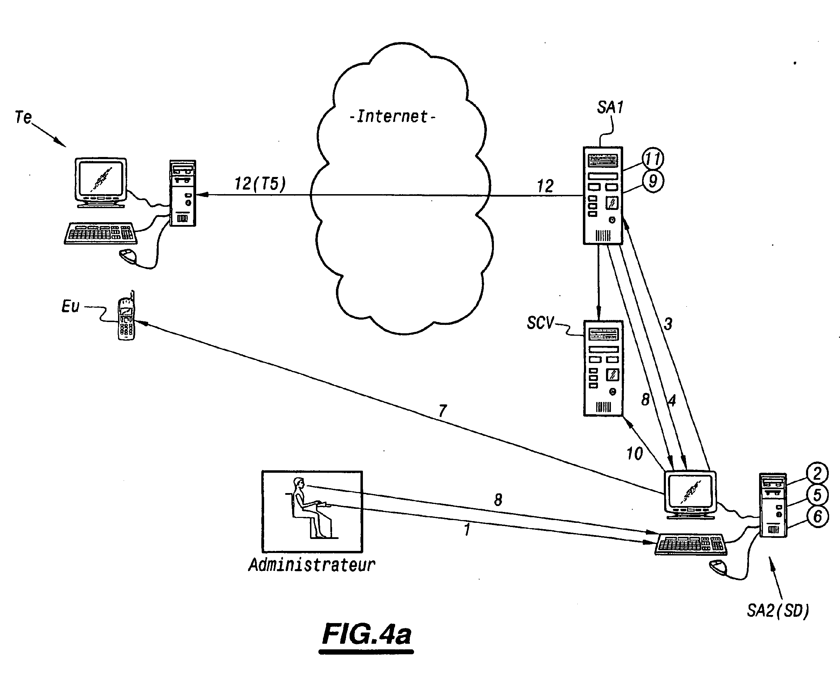

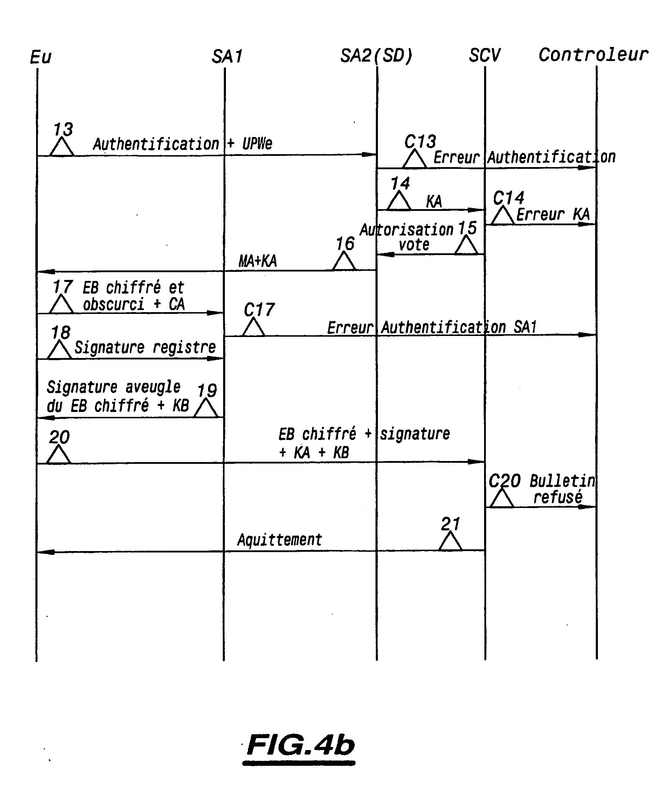

Une description plus détaillée du mode opératoire d'une architecture d'un système de vote électronique en réseau conforme à l'objet de la présente invention comprenant un serveur dédié plus particulièrement destiné à assurer le calcul et la gestion d'un mot de passe à usage unique sera maintenant donnée en liaison avec les figures 4a et 4b.

Sur la figure 4a précitée, on indique que l'électeur utilisateur Eu est réputé disposer d'un terminal de téléphonie mobile et d'un terminal électronique Te, tel qu'un ordinateur personnel connecté à Internet, par exemple.

Le serveur administrateur $SA_1$ joue essentiellement le rôle de serveur de liste électorale, le deuxième serveur administrateur $SA_2$ joue le rôle de serveur dédié SD et le serveur de comptage de voix SCV est interconnecté au premier et au deuxième serveurs administrateurs, ainsi que mentionné précédemment dans la description en liaison avec la figure 3.

De préférence, ainsi que représenté sur la figure 4a, le système de vote électronique en réseau objet de l'invention comprend au niveau de l'un des serveurs administrateurs $SA_1$ ou $SA_2$ un module de calcul et de transmission de ce serveur administrateur à l'électeur Eu et au terminal électeur Te d'un certificat d'authentification CA et d'un mot de passe à usage unique UPWe dédié à cet électeur.

En référence à la figure 4a et à la figure 3, on indique que le module de calcul précité est implanté au niveau du deuxième serveur administrateur jouant le rôle de serveur dédié SD, lequel permet la mise en oeuvre des opérations $A_0$, $A_1$, $A_2$, $A_3$ représentées en figure 1 a et indiquées au tableau précédent.

Le système objet de l'invention comporte au niveau du serveur de comptage de voix SCV un module de réception et de traitement d'un message issu du terminal électeur Te et contenant au moins le bulletin de vote électronique EB choisi par cet électeur et la référence anonyme à l'électeur utilisateur AREu qui est fonction du mot de passe à usage unique UPWe, et dédiée à cet électeur. Ce module de réception correspond à la réception par le serveur de comptage de voix, message transmis à l'étape $B_0$ de la figure 1 a par le terminal électeur Te.

Le serveur de comptage de voix SCV comporte en outre un module de vérification à la valeur vraie de la référence anonyme à l'électeur utilisateur AREu, et en conséquence du mot de passe à usage unique dédié reçu.

Ce module correspond à l'exécution de l'étape $B_1$ de la figure 1a étant entendu que ce module exécute l'exécution de la vérification précitée par comparaison par exemple de la référence anonyme à l'électeur utilisateur AREu ou du mot de passe à usage unique UPWe transmise par le deuxième serveur administrateur jouant le rôle de serveur dédié SD au serveur de comptage de voix SCV et de la référence anonyme AREu transmise précédemment par le terminal électeur Te au serveur de comptage de voix SCV.

Le serveur de comptage de voix comporte également un module de validation du bulletin de vote électronique EB et du vote électronique de cet électeur associé à un module de comptage de voix de ce bulletin de vote électronique, ainsi que mentionné précédemment dans la description en fonction de la valeur faciale de ce bulletin de vote électronique. Les modules précités correspondent à la mise en oeuvre de l'étape $B_3$ de la figure 1 a et de la figure 3.

Enfin, le serveur de comptage de voix SCV comprend un module de calcul et de transmission au terminal électeur Te d'un message d'accusé de réception et d'un document de registre électoral électronique, opération réalisée à l'étape $B_4$ de la figure 1a et de la figure 3.

Un mode opératoire préférentiel du protocole d'échange des messages et transactions entre les différents acteurs, premier serveur administrateur $SA_1$, deuxième serveur administrateur $SA_2$ jouant le rôle de serveur dédié SD, serveur de comptage de voix SCV et terminal électeur Te, sera maintenant donné en liaison avec la figure 4a et la figure 4b.

D'une manière générale, en référence à la figure 4a, on indique que le serveur administrateur, en particulier le deuxième serveur administrateur $SA_2$ jouant le rôle de serveur dédié comprend au moins un module de mémorisation de données représentatif de la liste des scrutins, de la liste des candidats à ces scrutins, liée à une ou plusieurs circonscriptions.

Cette opération est réalisée 1 sous l'autorité des organisateurs de la votation, désignés Administrateur lesquels peuvent actualiser le serveur dédié $SA_2$.

Ce dernier comprend un module de calcul, exécuté en 2, d'un ensemble de mini applications sous forme de listes, ces mini applications MA étant connues sous le nom de « applets ». Une mini application est associée à une circonscription et contient la liste des candidats et des clés de chiffrement des bulletins de vote électronique.

En particulier, on comprend que les bulletins de vote électronique EB, représentés entre crochets lors de leur transmission, sont bien entendus chiffrés au moyen des clés de chiffrement précitées avec un haut degré de sécurité. Le haut degré de sécurité s'entend d'un chiffrement en dur au moyen de clés de chiffrement à clés dissymétriques, par exemple selon l'algorithme RSA ou autre.

Le deuxième serveur administrateur $SA_2$ jouant le rôle de serveur dédié comprend en outre un module de transmission des mini applications, contenant la liste des candidats et des clés de chiffrement au premier serveur administrateur $SA_1$.

Le premier serveur administrateur $SA_1$ reçoit 3 la liste des mini applications, procède à la compilation de ces dernières, procède à leur signature et publie la liste des candidats pour contrôle.

Dans ce but, le premier serveur administrateur $SA_1$ comprend bien entendu un module de mémorisation de la liste des mini applications, un module de compilation des mini applications et de signature des mini applications compilées et un module d'extraction et de publication de la liste des candidats pour chaque circonscription et chaque mini application, ainsi qu'un module de transmission des mini applications signées au deuxième serveur administrateur $SA_2$, serveur dédié SD et au terminal électeur de chaque électeur concerné.

En particulier, on comprend que le premier serveur administrateur $SA_1$. renvoie 4 la liste des applications des mini applications signées au deuxième serveur administrateur, serveur dédié SD.

Le serveur dédié précité procède alors au contrôle 5 de l'intégrité des mini applications signées par vérification de signature et sur autorisation transmise par le deuxième serveur administrateur serveur dédié SD au premier serveur administrateur, ce dernier est alors en mesure de transmettre à chaque électeur concerné les mini applications d'origine vérifiées qui n'ont pu être remplacées par des mini applications modifiées.

Pour ce qui concerne la gestion des mots de passe à usage unique UPWe, on indique que le deuxième serveur administrateur $SA_2$, serveur dédié SD engendre 6 l'ensemble des mots de passe à usage unique précité.

Le serveur dédié SD transmet 7 alors le mot de passe à usage unique UPWe à l'électeur utilisateur Eu concerné, ainsi que décrit précédemment dans la description en liaison avec la figure 3 par exemple.

En ce qui concerne la gestion des clés de chiffrement précédemment mentionnée, on indique que le premier serveur administrateur $SA_1$ reçoit des autorités responsables du système, c'est-à-dire des administrateurs assurant la gestion de l'ensemble du système, la liste des clés de chiffrement public permettant la réalisation des messages chiffrés transmis encore désignés « mix net » et le chiffrement destiné à empêcher la divulgation des bulletins électroniques EB avant la fin du scrutin. Les clés de chiffrement précitées sont transmises avec chaque mini application MA à chacun des terminaux électeurs Te concerné.

Enfin, la gestion des clés d'authentification est réglée pour la mise en oeuvre des certificats d'authentification par le premier serveur administrateur $SA_1$ respectivement le deuxième serveur administrateur $SA_2$ jouant le rôle de serveur dédié SD.

Les deux serveurs précités engendrent une liste de clés d'authentification désignée LKA pour les clés d'authentification engendrées par le serveur dédié SD respectivement LKB engendré par le premier serveur administrateur $SA_1$.

Chaque électeur utilisateur Eu se voit ainsi attribuer une paire de clés d'authentification KA engendrées par le serveur dédié SD, deuxième serveur administrateur respectivement KB engendré par le premier serveur administrateur $SA_1$.

Chacun des serveurs $SA_1$ et $SA_2$, serveur dédié SD, engendre une liste des clés d'authentification LKB respectivement LKA qu'il a engendrées.

Le premier serveur administrateur $SA_1$ ayant engendré la liste de clés d'authentification LKB transmet 9 au serveur dédié SD des couples de valeurs formés par l'identité de l'électeur, ou un code d'identité lié à ce dernier, et une fonction de hachage de la clé d'authentification KB qui lui est associée.

Le serveur dédié SD calcule la fonction de hachage des clés de la liste de clés LKA et apparie la fonction de hachage HKB des clés d'authentification reçue KB avec la fonction de hachage de la clé d'authentification KA correspondante.

Il procède ensuite à la transmission 10 des couples des seules valeurs de fonction de hachage HKA, HKB au premier serveur administrateur $SA_1$ en l'absence de toute association avec le code d'identité de l'électeur utilisateur Eu.

En ce qui concerne la gestion des certificats d'authentification, cette dernière est effectuée selon une architecture PKI, telle que mentionnée précédemment dans la description.

Dans ce but, le premier serveur administrateur $SA_1$ engendre 11 une liste de certificats indispensables pour ne laisser participer au vote que les électeurs utilisateurs Eu habilités.

Le premier serveur administrateur $SA_1$ engendre et assure la gestion d'une liste de révocation des certificats précités.

On comprend en particulier que suite à la transaction $T_2$ représentée en figure 3 par exemple où le premier serveur administrateur a reçu le certificat d'authentification CA, le premier serveur administrateur précité construit une liste lui permettant de ne laisser participer au vote que les électeurs habilités.

Le premier serveur administrateur $SA_1$ transmet ensuite 12 à chaque électeur son certificat d'authentification selon la transaction $T_5$ représentée en figure 3.

L'électeur utilisateur Eu est alors à même d'installer le certificat d'authentification CA sur son terminal électeur Te.

Les transactions effectuées par l'électeur utilisateur et par l'ensemble du système le jour du vote sont maintenant explicitées en liaison avec la figure 4b.

Le jour du vote, l'électeur utilisateur Eu se connecte 13 au serveur dédié $SA_2$ (SD). Il transmet son mot de passe à usage unique UPWe et les informations permettant de l'authentifier. Le deuxième serveur administrateur $SA_2$ (SD) interroge une base de données qui lui donne la clé d'authentification KB qui a été associée à cet électeur utilisateur.

Dans le cas où plusieurs scrutins ont lieu le même jour, plusieurs clés d'authentification KB seront disponibles par diversification pour le même électeur Eu.

Dans cette hypothèse, le serveur dédié $SA_2$ (SD) est alors à même d'interroger plusieurs serveurs de comptage de voix (SCV) correspondant à chaque élection.

Sur erreur de la tentative de connection précitée notée $C_{13}$, en raison d'une erreur d'authentification, le processus d'authentification de l'électeur utilisateur Eu, à partir de son certificat d'authentification, n'ayant pas pu être mené avec succès, un processus de contrôle est activé et l'évènement est alors tracé afin de mettre en oeuvre des procédures de sécurité anti-fraude, par exemple.

Cette opération peut correspondre à une opération lancée à l'issue du retour $A_2$ de la figure 1c sur réponse négative à l'identification de l'électeur utilisateur.

En l'absence d'erreur d'authentification, le deuxième serveur administrateur dédié $SA_2$ (SD) transmet 14 la clé d'authentification KA au serveur de comptage de voix SCV. Le serveur de comptage de voix SCV effectue alors un contrôle $C_{14}$ dans sa base de données pour vérifier que cette clé KA n'a pas déjà été utilisée. Dans le cas où cette clé KA a été utilisée, ainsi que représenté en figure 4b, l'électeur est averti par le serveur de comptage de voix SCV par l'intermédiaire du serveur dédié $SA_2$ (SD) qu'il n'a plus le droit de participer au vote pour ce scrutin.

En particulier, sur erreur d'authentification, c'est-à-dire lorsque la clé KA d'authentification a été déjà utilisée, l'évènement est tracé $C_{14}$, l'électeur utilisateur Eu étant réputé tenter de voter deux fois.

Le contrôleur ou organisme de contrôle contacte le premier serveur administrateur $SA_1$ pour vérifier que la signature est bien présente.

En l'absence d'erreur, le serveur de comptage de voix SCV transmet 15 au deuxième serveur administrateur dédié $SA_2$ (SD) l'autorisation de voter. La clé d'authentification KA est encore conservée dans les clés valides du serveur de comptage de voix SCV.

Le serveur dédié $SA_2$(SD) transmet 16 à l'électeur utilisateur Eu, c'est-à-dire en fait au terminal électeur Eu, une mini application de vote MA ainsi que la clé d'authentification KA.

On rappelle que la mini application de vote et la clé d'authentification KA ont été produites lors des préparatifs du vote. Après réception de la mini application MA et de la clé d'authentification KA, le terminal électeur Te exécute une connexion 17 au premier serveur administrateur $SA_1$. Le navigateur du terminal électeur Te propose alors un challenge que le certificat d'authentification CA préalablement distribué et installé sur ce terminal permet de relever grâce au système PKI et de certificats engendrés.

L'électeur choisit son candidat ou sa liste de candidats par le bulletin électronique EB et le terminal électeur Te procède alors à un processus de signature aveugle par l'intermédiaire de la mini application MA. Cette dernière obscurcit le bulletin électronique EB préalablement chiffré par un processus du type stéganographie et transmet 17 l'ensemble au premier serveur administrateur $SA_1$.

En cas de tentative infructueuse de connexion, au premier serveur administrateur $SA_1$, ces tentatives infructueuses sont répertoriées et tracées C17, une erreur d'authentification au niveau du premier serveur administrateur $SA_1$ est alors tracée et transmise à l'organisme de contrôle ou contrôleur. Ce dernier peut décider de ne plus traiter les demandes de vote provenant de certaines sources, c'est-à-dire de certains terminaux Te, pendant un certain temps.

En l'absence d'erreur d'authentification, l'électeur utilisateur signe le registre électoral au moyen de sa clé privée et transmet le registre signé en 18 au premier serveur administrateur $SA_1$.

Le premier serveur administrateur $SA_1$ envoie 19 la signature aveugle correspondant au bulletin obscurci et la clé d'authentification KB au terminal Te de l'électeur utilisateur Eu. La mini application MA éclaircit alors le bulletin et permet d'obtenir la signature valide du bulletin électronique EB éclairci mais toujours chiffré. La clé d'authentification KB détenue par l'électeur utilisateur et le terminal électronique Te est la preuve que le registre électoral a bien été signé.

La mini application MA installée sur le terminal électeur Te de l'électeur utilisateur Eu se connecte 20 au serveur de comptage de voix SCV et transmet l'ensemble formé par le bulletin électronique EB chiffré, la signature aveugle, la clé d'authentification KA et la clé d'authentification KB.

Le serveur de contrôle de voix SCV procède alors à un contrôle $C_{20}$ de la signature qui doit être celle du premier serveur administrateur $SA_1$ et de la clé d'authentification KB qui doit être valide.

Le critère de validité consiste alors dans le fait que le couple de fonction de hachage des clés d'authentification KA et KB, c'est-à-dire les couples HKA et HKB, doivent faire partie des couples non utilisés et connus.

Le serveur de comptage de voix SCV stocke alors le bulletin électronique EB chiffré et la signature aveugle dans une base en attendant le dépouillement. Il stocke dans une autre base de données le couple de clés d'authentification KA, KB comme preuve qu'il a reçu l'original d'un des couples de clés d'authentification autorisées.

En cas de défaut de non vérification dans la chaîne de contrôle exécutée par le serveur de contrôle de voix SCV précédemment décrite, le serveur de contrôle de voix précité transmet $C_{20}$ un avis de refus de bulletin de vote à l'organisme contrôleur, ainsi que représenté sur la figure 4b.

Au contraire, lorsque l'ensemble des contrôles a été exécuté avec succès par le serveur de comptage de voix SCV, ce dernier avertit l'électeur utilisateur Eu que son bulletin est pris en compte.

Un mécanisme de transmission anonyme peut être mis en place.

Sur la figure 4b et en liaison avec la figure 4a, on indique que la procédure de signature du registre électoral en 18 et 19 est rendue possible par le processus d'authentification au moyen des clés d'authentification KA et KB, lesquelles sont séparément engendrées par le premier serveur administrateur $SA_1$ respectivement le deuxième serveur administrateur $SA_2$.

Dans ces conditions, le serveur de comptage de voix apparaît ainsi comme un arbitre permettant de vérifier, suite à l'étape 20 de transmission des clés KA et KB, l'intégrité du vote et de la conduite de ce dernier indépendamment par les trois entités indépendantes constituées par le premier serveur administrateur $SA_1$, le deuxième serveur administrateur dédié $SA_2(SD)$ et le serveur de comptage de voix SCV.

**Revendications**

1. Procédé de vote électronique en réseau à haute sécurité, pour un électeur utilisateur d'un terminal électeur connecté en réseau à au moins un serveur administrateur (SA1, SA2) et à un serveur de comptage de voix (SCV), **caractérisé en ce qu'**il consiste au moins à :

   - transmettre du terminal électeur (Te) audit serveur administrateur un mot de passe à usage unique (UPWe) dédié à cet électeur,
   - transmettre dudit terminal électeur (Te) audit serveur de comptage de voix (SCV) un bulletin de vote électronique (EB) choisi par cet électeur et une référence anonyme à cet électeur utilisateur; et, sur vérification, par rapport à la valeur vraie, de ladite référence anonyme à l'électeur utilisateur,
   - valider le bulletin de vote électronique et le vote électronique de cet électeur et décompter ce bulletin de vote électronique en fonction de la valeur faciale de ce dernier ;
   - transmettre dudit serveur de comptage de voix audit terminal électeur un accusé de réception ;
   - calculer et transmettre du terminal électeur audit serveur administrateur un document de registre électoral signé électroniquement, ledit serveur administrateur procédant, sur vérification, par rapport à la valeur vraie, du document de registre électoral signé, à la clôture de l'opération de vote de l'électeur utilisateur de ce terminal électeur.

2. Procédé selon la revendication 1, **caractérisé en ce que** la référence anonyme est fonction du mot de passe.

3. Procédé selon la revendication 2, **caractérisé en ce qu'**il comprend une opération consistant à transmettre dudit serveur de comptage de voix audit terminal électeur d'un document de registre électronique.

4. Procédé selon la revendication 3, **caractérisé en ce qu'**il comprend une opération consistant à calculer et transmettre du serveur administrateur audit électeur et au terminal électeur un certificat d'authentification, ladite opération étant exécutée sur requête d'autorisation de prendre part au vote de l'électeur utilisateur dudit terminal électeur, ladite requête d'autorisation comportant au moins des données d'identification personnelle dudit électeur, ledit certificat d'authentification étant calculé et transmis sur vérification, par rapport à la valeur vraie, desdites données d'identification personnelle par ledit serveur administrateur.

5. Procédé selon la revendication 4, **caractérisé en ce qu'**il comprend une opération consistant à calculer et transmettre dudit serveur administrateur audit électeur et audit terminal électeur un mot de passe à usage unique dédié à cet électeur, les opérations consistant à calculer et transmettre un mot de passe à usage unique dédié à cet électeur étant exécutées conditionnellement à la vérification, par rapport à la valeur vraie, desdites données d'identification personnelle par ledit serveur administrateur et suite à la transmission dudit certificat d'authentification.

6. Procédé selon l'une des revendications 1 à 6, **caractérisé en ce que** l'opération consistant à calculer et à transmettre un mot de passe à usage unique est effectuée à partir d'un serveur dédié indépendant desdits serveur administrateur et serveur de comptage de voix, ledit serveur dédié calculant un mot de passe à usage unique et un seul associé audit électeur.

7. Procédé selon la revendication 6, **caractérisé en ce que** les échanges de massages entre le serveur administrateur, le serveur de comptage de voix et le serveur dédié sont effectués entre chacun d'eux suite à un protocole d'authentification réussie à divulgation de connaissance nulle.

8. Procédé selon l'une des revendications 1 à 7, **caractérisé en ce que** la transmission du serveur administrateur audit électeur et audit terminal électeur d'un certificat d'authentification respectivement d'un mot de passe à usage unique dédié à cet électeur est effectuée par l'intermédiaire de canaux de transmission distincts.

9. Système de vote électronique en réseau à haute sécurité pour un électeur utilisateur d'un terminal électeur connecté en réseau à au moins un serveur administrateur et à un serveur de comptage de voix, **caractérisé en ce que** celui-ci comporte au moins :

• au niveau dudit serveur administrateur,

❖ des moyens de réception en provenance du terminal électeur d'un mot de passe à usage unique dédié à cet électeur ; et

• au niveau dudit serveur de comptage de voix,

❖ des moyens de réception et de traitement d'un message issu dudit terminal électeur et contenant au moins un bulletin de vote électronique choisi par cet électeur et une référence anonyme à l'électeur utilisateur;
❖ des moyens de vérification, par rapport à la valeur vraie de ladite référence anonyme reçue ;
❖ des moyens de validation du bulletin de vote électronique et du vote électronique de cet électeur et des moyens de comptage de voix de ce bulletin de vote électronique, en fonction de la valeur faciale de ce dernier ;
❖ des moyens de calcul et de transmission audit terminal électeur d'un message d'accusé de réception.

**10.** Serveur administrateur de vote électronique en réseau à haute sécurité, pour un électeur utilisateur d'un terminal électeur, **caractérisé en ce qu'**il comporte au moins :

- des moyens de réception en provenance du terminal électeur d'un mot de passe à usage unique dédié à cet électeur ;
- des moyens de réception, en provenance du terminal électeur, d'un document du registre électoral signé électroniquement ; et
- des moyens pour, sur vérification, par rapport à la valeur vraie, du document de registre électoral signé, clôturer l'opération de vote de l'électeur utilisateur du terminal électeur.

**11.** Serveur selon la revendication 10, **caractérisé en ce qu'**il comporte :

- un premier serveur administrateur de gestion des listes électorales, en fonction des circonscriptions et des candidats au scrutin ;
- un deuxième serveur administrateur, serveur dédié indépendant desdits premier serveur administrateur et serveur de comptage de voix, ledit serveur dédié calculant un mot de passe à usage unique et un seul associé audit électeur.

**12.** Serveur selon la revendication 11, **caractérisé en ce que** ledit serveur administrateur respectivement ledit deuxième serveur administrateur, serveur dédié, comprend au moins :

- des moyens de mémorisation de données représentatives de la liste des scrutins, de la liste des candidats à ces scrutins, liés à une ou plusieurs circonscriptions ;
- des moyens de calcul d'un ensemble de mini-applications sous forme de liste, une mini application étant associée à une circonscription et contentant la liste des candidats et les clefs de chiffrement des bulletins de vote électronique ;
- des moyens de transmission desdites mini applications audit premier serveur administrateur.

**13.** Serveur selon la revendication 12, **caractérisé en ce que** ledit premier serveur administrateur comporte au moins :

- des moyens de mémorisation de la liste des mini-applications ;
- des moyens de compilation des mini-applications et de signature des mini-applications compilées ;
- des moyens d'extraction et de publication de la liste des candidats pour chaque circonscription et chaque mini-application ;
- des moyens de transmission des mini-applications signées audit deuxième serveur administrateur, serveur dédié, et au terminal électeur de chaque électeur concerné.

**14.** Serveur selon la revendication 10 ou 11, **caractérisé en ce que** ledit serveur administrateur respectivement ledit deuxième serveur administrateur comporte en outre des moyens de codage permettant de protéger par un code le mot de passe à usage unique calculé et transmis audit électeur.

**15.** Serveur selon l'une des revendications 10 à 14, **caractérisé en ce que** ledit serveur administrateur respectivement ledit premier serveur administrateur comporte des moyens de mémorisation de clés publiques permettant d'engendrer un brassage et un chiffrement des messages transmis, notamment des bulletins de vote électroniques afin d'assurer la confidentialité de ces derniers, lesdites clés publiques étant transmises avec lesdites mini applications.

**16.** Serveur selon l'une des revendications 11 à 15, **caractérisé en ce que** ledit premier serveur administrateur et ledit deuxième serveur administrateur, serveur dédié, comportent chacun des moyens générateurs d'une liste de clés d'authentification, à chaque électeur utilisateur d'un terminal électeur étant attribuée une paire de clés d'authentification formée par

- une première clé d'authentification engendrée par ledit deuxième serveur administrateur, serveur dédié ; et par
- une deuxième clé d'authentification engendrée par ledit premier serveur administrateur ;
- ledit premier serveur administrateur engendrant une liste de deuxièmes clés d'authentification et transmettant dudit deuxième serveur administrateur, serveur dédié, des couples de données formées par une valeur d'identité d'un électeur candidat au vote, et par une valeur de hachage de la deuxième clé d'authentification associée à ce dernier ; et
- ledit deuxième serveur administrateur, serveur dédié, opérant un appariement de la valeur de hachage de la deuxième clé d'authentification à la première clé d'authentification et calculant une valeur de hachage de la première clé d'authentification et transmettant un couple formé par la valeur de hachage de la première et de la deuxième clé d'authentification audit serveur de comptage de voix.

**17.** Serveur selon l'une des revendications 11 à 16, **caractérisé en ce que** ledit premier serveur administrateur comporte en outre :

- des moyens de calcul d'une liste de certificats d'authentification pour n'autoriser la participation au vote que des seuls électeurs identifiés ; et
- des moyens de gestion d'une liste de révocation desdits certificats d'authentification ; et
- des moyens de transmission au terminal électeur du certificat d'authentification associé à l'électeur candidat identifié, utilisateur de ce terminal électeur.

**18.** Serveur de comptage de voix de vote électronique en réseau à haute sécurité, pour un électeur utilisateur d'un terminal électeur, **caractérisé en ce qu'**il comporte au moins :

❖ des moyens de réception et de traitement d'un message issu dudit terminal électeur et contenant au moins un bulletin de vote électronique choisi par cet électeur et une référence anonyme audit électeur utilisateur ;
❖ des moyens de vérification, par rapport à la valeur vraie, de ladite référence anonyme reçue ;
❖ des moyens de validation du bulletin de vote électronique et du vote électronique de cet électeur et des moyens de comptage de voix de ce bulletin de vote électronique, en fonction de la valeur faciale de ce dernier ;
❖ des moyens de calcul et de transmission audit terminal électeur d'un message d'accusé de réception.

**19.** Serveur selon la revendication 18 ou 10, **caractérisé en ce que** la référence anonyme audit électeur utilisateur est fonction d'un mot de passe à usage unique dédié à cet électeur.

**20.** Serveur selon la revendication 18 ou 10, **caractérisé en ce que** les moyens de calcul et de transmission d'un message d'accusé de réception sont configurés pour calculer et transmettre un document de registre électoral électronique.

## Claims

**1.** Method of electronic voting in a high-security network, for a user elector operating an elector terminal connected in a network to at least one administrator server (SA1, SA2) and to a vote counting server (SCV), **characterized in that** it consists at least in:

- transmitting from the elector terminal (Te) to said administrator server a single-use password (UPWe) dedicated to this elector,
- transmitting from said elector terminal (Te) to said vote counting server (SCV) an electronic voting ballot paper (EB) chosen by this elector and an anonymous reference to this user elector; and, on verification with respect to the true value of said anonymous reference to the user elector,

- validating the electronic voting ballot paper and the electronic vote of this elector and docking this electronic voting ballot paper as a function of the latter's face value;
- transmitting from said vote counting server to said elector terminal an acknowledgement of receipt; and
- calculating and transmitting from the elector terminal to said administrator server an electronically signed electoral register document, said administrator server proceeding, on verification with respect to the true value of the signed electoral register document, to the closure of the voting operation of the user elector operating this elector terminal.

**2.** Method according to Claim 1, **characterized in that** the anonymous reference is dependent on the password.

**3.** Method according to Claim 2, **characterized in that** it comprises an operation consisting in transmitting from said vote counting server to said elector terminal an electronic register document.

**4.** Method according to Claim 3, **characterized in that** it comprises an operation consisting in calculating and transmitting from the administrator server to said elector and to the elector terminal an authentication certificate, said operation being executed on request for authorization to take part in the vote from the user elector operating said elector terminal, said request for authorization comprising at least personal identification data for said elector, said authentication certificate being calculated and transmitted on verification with respect to the true value of said personal identification data by said administrator server.

**5.** Method according to Claim 4, **characterized in that** it comprises an operation consisting in calculating and transmitting from said administrator server to said elector and to said elector terminal a single-use password dedicated to this elector, the operations consisting in calculating and transmitting a single-use password dedicated to this elector being executed conditionally on the verification with respect to the true value of said personal identification data by said administrator server and following the transmission of said authentication certificate.

**6.** Method according to one of Claims 1 to 5, **characterized in that** the operation consisting in calculating and in transmitting a single-use password is performed on the basis of a dedicated server independent of said administrator server and vote counting server, said dedicated server calculating a one-off single-use password associated with said elector.

**7.** Method according to Claim 6, **characterized in that** the exchanges of messages between the administrator server, the vote counting server and the dedicated server are performed between each of them following a successful zero knowledge disclosure authentication protocol.

**8.** Method according to one of Claims 1 to 7, **characterized in that** the transmission from the administrator server to said elector and to said elector terminal of an authentication certificate respectively of a single-use password dedicated to this elector is performed by way of distinct transmission channels.

**9.** System for electronic voting in a high-security network for a user elector operating an elector terminal connected in a network to at least one administrator server and to a vote counting server, **characterized in that** the latter comprises at least:

■ at the level of said administrator server,

❖ means for receiving from the elector terminal a single-use password dedicated to this elector; and

■ at the level of said vote counting server,

❖ means for receiving and processing a message arising from said elector terminal and containing at least one electronic voting ballot paper chosen by this elector and an anonymous reference to the user elector;
❖ means for verifying with respect to the true value said anonymous reference received;
❖ means for validating the electronic voting ballot, paper and the electronic vote of this elector and means for counting votes from this electronic voting ballot paper, as a function of the latter's face value;
❖ means for calculating and transmitting to said elector terminal an acknowledgement of receipt message.

**10.** Administrator server for electronic voting in a high-security network, for a user elector operating an elector terminal, **characterized in that** it comprises at least:

- means for receiving from the elector terminal a single-use password dedicated to this elector;
- means for receiving, from the elector terminal, an electronically signed electoral register document; and
- means for, on verification with respect to the true value of the signed electoral register document, closing the voting operation of the user elector operating the elector terminal.

**11.** Server according to Claim 10, **characterized in that** it comprises:

- a first administrator server for managing the electoral lists, as a function of the districts and the candidates in the ballot;
- a second administrator server, a dedicated server independent of said first administrator server and said vote counting server, said dedicated server calculating a one-off single-use password associated with said elector.

**12.** Server according to Claim 11, **characterized in that** said administrator server respectively said second administrator server, dedicated server, comprises at least :

- means for storing data representative of the list of ballots, of the list of candidates in these ballots, relating to one or more districts;
- means for calculating a set of mini-applications in list form, a mini-application being associated with a district and containing the list of candidates and the keys for enciphering the electronic voting ballot papers;
- means for transmitting said mini-applications to said first administrator server.

**13.** Server according to Claim 12, **characterized in that** said first administrator server comprises at least :

- means for storing the list of mini-applications;
- means for compiling the mini-applications and for signing the compiled mini-applications;
- means for extracting and publishing the list of candidates for each district and each mini-application;
- means for transmitting the signed mini-applications to said second administrator server, dedicated server, and to the elector terminal of each elector concerned.

**14.** Server according to Claim 10 or 11, **characterized in that** said administrator server respectively said second administrator server furthermore comprises coding means making it possible to protect by a code the single-use password calculated and transmitted to said elector.

**15.** Server according to one of Claims 10 to 14, **characterized in that** said administrator server respectively said first administrator server comprises means for storing public keys making it possible to generate a shuffling and an encipherment of the messages transmitted, in particular of the electronic voting ballot papers so as to ensure their confidentiality, said public keys being transmitted with said mini-applications.

**16.** Server according to one of Claims 11 to 15, **characterized in that** said first administrator server and said second administrator server, dedicated server, each comprise means for generating a list of authentication keys, each user elector operating an elector terminal being allocated a pair of authentication keys, made up of

- a first authentication key generated by said second administrator server, dedicated server; and of
- a second authentication key generated by said first administrator server;
- said first administrator server generating a list of second authentication keys and transmitting to said second administrator server, dedicated server, data pairs made up of an identity value of an elector who is a candidate for the vote, and by a hash value of the second authentication key associated with him; and
- said second administrator server, dedicated server, effecting a pairing of the hash value of the second authentication key with the first authentication key and calculating a hash value of the first authentication key and transmitting a pair made up of the hash value of the first and the second authentication key to said vote counting server.

**17.** Server according to one of Claims 11 to 16, **characterized in that** said first administrator server furthermore comprises:

- means for calculating a list of authentication certificates so as to authorize the participation in the vote of only the identified electors; and
- means for managing a revocation list for said authentication certificates; and

- means for transmitting to the elector terminal the authentication certificate associated with the identified candidate elector who is the user of this elector terminal.

18. Vote counting server for electronic voting in a high-security network, for a user elector operating an elector terminal, **characterized in that** it comprises at least:

❖ means for receiving and processing a message arising from said elector torminal and containing at least one electronic voting ballot paper chosen by this elector and an anonymous reference to said user elector;
❖ means for verifying with respect to the true value said anonymous reference received;
❖ means for validating the electronic voting ballot paper and the electronic vote of this elector and means for counting votes from this electronic voting ballot paper, as a function of the latter's face value;
❖ means for calculating and transmitting to said elector terminal an acknowledgement of receipt message.

19. Server according to Claim 18 or 10, **characterized in that** the anonymous reference to said user elector is dependent on a single-use password dedicated to this elector.

20. Server according to Claim 18 or 10, **characterized in that** the means for calculating and transmitting an acknowledgement of receipt message are configured to calculate and transmit an electronic electoral register document.

## Patentansprüche

1. Verfahren zur elektronischen Abstimmung in einem Hochsicherheitsnetzwerk für einen Wähler-Benutzer eines Wähler-Endgeräts, das mit mindestens einem Administrator-Server (SA1, SA2) und mit einem Stimmenauszählungs-Server (SCV) vernetzt ist, **dadurch gekennzeichnet, dass** es mindestens darin besteht:

- vom Wähler-Endgerät (Te) zum Administrator-Server ein diesem Wähler dediziertes Einmalpasswort (UPWe) zu übertragen,
- vom Wähler-Enndgerät (Te) zum Stimmenauszählungs-Server (SCV) einen vom diesem Wähler gewählten elektronischen Stimmzettel (EB) und einen anonymen Bezug auf diesen Wähler-Benutzer zu übertragen; und nach Überprüfung bezüglich des wahren Werts des anonymen Bezugs auf den Wähler-Benutzer,
- den elektronischen Stimmzettel und die elektronische Abstimmung dieses Wählers zu validieren und diesen elektronischen Stimmzettel in Abhängigkeit von dessen Nennwort auszuzählen;
- eine Empfangsbescheinigung vom Stimmenauszählungs-Server zum Wähler-Endgerät zu übertragen;
- ein elektronisch signiertes Wahlregisterdokument zu berechnen und vom Wähler-Endgerät zum Administrator-Server zu übertragen, wobei der Administrator-Server nach Überprüfung bezüglich des wahren Werts des signierten Wahlregisterdokuments den Abstimmungsvorgang des Wähler-Benutzers dieses Wähler-Endgeräts beendet.

2. Verfahren nach Anspruch 1, **dadurch gekennzeichnet, dass** der anonyme Bezug vom Passwort abhängt.

3. Verfahren nach Anspruch 2, **dadurch gekennzeichnet, dass** es einen Vorgang aufweist, der darin besteht, ein elektronisches Registerdokument vom Stimmenauszählungs-Server zum Wähler-Endgerät zu übertragen.

4. Verfahren nach Anspruch 3, **dadurch gekennzeichnet, dass** es einen Vorgang aufweist, der darin besteht, ein Authentifizierungs-Zertifikat zu berechnen und vom Administrator-Server zum Wähler und zum Wähler-Endgerät zu übertragen, wobei der Vorgang auf Antrag zur Teilnshmeberechtigung an der Abstimmung des Wähler-Benutzers des Wähler-Endgeräts durchgeführt wird, wobei der Berechtigungsantrag mindestens Daten der persönlichen Identifikation des Wählers enthält, wobei das Authentifizierungs-Zertifikat nach Überprüfung bezüglich des wahren Werts der Daten der persönlichen Identifikation durch den Administrator-Server berechnet und übertragen wird.

5. Verfahren nach Anspruch 4, **dadurch gekennzeichnet, dass** es einen Vorgang aufweiset, der darin besteht, ein diesem Wähler dediziertes Einmalpasswort zu berechnen und vom Administrator-Server zum Wähler und zum Wähler-Endgerät zu übertragen, wobei die Vorgänge, die darin bestehen, ein diesem Wähler dediziertes Einmalpasswort zu berechnen und zu übertragen, bedingt bei der Überprüfung bezüglich des wahren Werts der Daten der persönlichen Identifikation durch den Administrator-Server und nach der Übertragung des Authentifizierungs-Zertifikats durchgeführt werden.

**6.** Verfahren nach einem der Ansprüche 1 bis 5, **dadurch gekennzeichnet, dass** der Vorgang, der darin besteht, ein Einmalpasswort zu berechnen und zu übertragen, ausgehend von einem dedizierten Server unabhängig vom Administrator-Server und vom Stimmenauszählungs-Server durchgeführt wird, wobei der dedizierte Server ein Einmalpasswort und ein einziges dem Wähler zugeordnetes berechnet.

**7.** Verfahren nach Anspruch 6, **dadurch gekennzeichnet, dass** die Mitteilungsaustauschvorgänge zwischen dem Administrator-Server, dem Stimmenauszählungs-Server und dem dedizierten Server zwischen jedem von ihnen nach einem erfolgreichen Authentifizierungsprotokoll mit Zero-Knowledge-Offenbarung durchgerührt werden.

**8.** Verfahren nach einem der Ansprüche 1 bis 7, **dadurch gekennzeichnet, dass** die Übertragung vom Administrator-Server zum Wähler und zum Wähler-Endgerät eines Authentifizierungs-Zertifikats bzw. eines diesem Wähler dedizierten Einmalpassworts mittels unterschiedlicher Übertragungskanäle durchgeführt wird.

**9.** Elektronisches Abstimmnungssystem in einem Hochsicherheitsnetzwerk für einen Wähler-Benutzer eines Wähler-Endgeräts, das mit mindestens einem Administrator-Server und mit einem Stimmenauszählungs-Server vernetzt ist, **dadurch gekennzeichnet, dass** dieses mindestens aufweist:

■ auf der Ebene des Administrator-Servers,

❖ Mittel zum Empfang eines vom Wähler-Endgerät kommenden, diesem Wähler dedizierten Einmalpassworts; und

■ auf der Ebene des Stimmenauszählungs-Servers,

❖ Mittel zum Empfang und zur Verarbeitung einer vom Wähler-Endgerät stammenden und mindestens einen von diesem Wähler gewählten elektronischen Stimmzettel und einen anonymen Bezug auf den Wähler-Benutzer enthaltenden Mitteilung;
❖ Mittel zur Überprüfung bezüglich des wahren Werts des empfangenen anonymen Bezugs;
❖ Mittel zur Validierung des elektronischen Stimmzettels und der elektronischen Abstimmung dieses Wählers und Mittel zur Stimmenauszählung dieses elektronischen Stimmzettels in Abhängigkeit von dessen Nennwert;
❖ Mittel zur Berechnung und zur Übertragung einer Empfangsbestätigungs-Mittellung an das Wähler-Endgerät.

**10.** Administrator-Server einer elektronischen Abstimmung in einem Hochsicherheitsnetzwerk für einen Wähler-Benutzer eines Wähler-Endgeräts, **dadurch gekennzeichnet, dass** er mindestens aufweist:

- Mittel zum Empfang eines vom Wähler-Endgerät kommenden, diesem Wähler dedizierten Einmalpassworts;
- Mittel zum Empfang eines vom Wähler-Endgerät kommenden elektronisch signieten Wahlregister-Dokuments; und
- Mittel, um nach Überprüfung bezüglich des wahren Werts des signierten WahlregisterDokuments den Abstimmungsvorgang des Wählers-Benutzers des Wähler-Endgeräts zu beenden.

**11.** Server nach Anspruch 10, **dadurch gekennzeichnet, dass** er aufweist:

- einen ersten Administrator-Server zur Verwaltung der Wahllisten in Abhängigkeit von den Wahlkreisen und den Abstimmungskandidaten;
- einen zweiten Administrator-Server, dedizierter Server, der von dem ersten Administrätor-Server und dem Stimmenauszählungs-Server unabhängig ist, wobei der dedizierte Server ein Einmalpasswort und ein einziges dem Wähler zugeordnetes berechnet.

**12.** Server nach Anspruch 11, **dadurch gekennzeichnet, dass** der Administrator-Server bzw. der zweite Administrator-Server, der dedizierte Server, mindestens aufweist:

- Mittel zur Speicherung von für die Liste der Abstimmungen, die Liste der Kandidaten bei diesen Abstimmungen, die mit einem oder mehreren Wahlkreisen verbunden sind, repräsentativen Daten;
- Mittel zur Berechnung einer Einheit von Mini-Anwendungen in Form einer Liste, wobei eine Mini-Anwendung einem Wahlkreis zugeordnet ist und die Liste der Kandidaten und die Verschlüsselungsschlüssel der elektronischen Stimmzettel enthält;
- Mittel zur Übertragung der Mini-Anwendungen an den ersten Administrator-Server.

**13.** Server nach Anspruch 12, **dadurch gekennzeichnet, dass** der erste Administrator-Server mindestens aufweist:

- Mittel zur Speicherung der Liste der Mini-Anwendungen;
- Mittel zur Kompilierung der Mini-Anwendungen und zur Signätur der kompilierten Mini-Anwendungen;
- Mittel zur Entnahme und zur Veröffentlichung der Liste der Kandidaten für jeden Wahlkreis und jede Mini-Anwendung;
- Mittel zur Übertragung der signierten Mini-Anwendungen an den zweiten Administrator-Server, dedizierter Server, und an das Wähler-Endgerät jedes betroffenen Wählers.

**14.** Server nach Anspruch 10 oder 11, **dadurch gekennzeichnet, dass** der Administrator-Server bzw. der zweite Administrator-Server außerdem Codiermittel aufweist, die es ermöglichen, das berechnete und an den Wähler übertragene Einmalpasswort durch einen Code zu schützen.

**15.** Server nach einem der Ansprüche 10 bis 14, **dadurch gekennzeichnet, dass** der Administrator-Server bzw. der erste Administrator-Server Mittel zur Speicherung von öffentlichen Schlüsseln aufweist, die es ermöglichen, eine Verzerrung und eine Verschlüsselung der übertragenen Mitteilungen zu erzeugen, insbesondere der elektronischen Stimmzettel, um deren Vertraulichkeit zu gewährleisten, wobei die öffentlichen Schlüssel mit den Mini-Anwendungen übertragen werden.

**16.** Server nach einem der Ansprüche 11 bis 15, **dadurch gekennzeichnet, dass** der erste Administrator-Server und der zweite Administrator-Server, dedizierter Server, je Mittel aufweisen, die eine Liste von Authentifizierungsschlüsseln erzeugen, wobei jedem Wähler-Benutzer eines Wähler-Endgeräts ein Paar von Authentifizierungsschlüsseln zugeteilt wird, das gebildet wird von

- einem ersten Authentifizierungsschlüssel, der vom zweiten Administrator-Server, dedizierter Server, erzeugt wird; und von
- einem zweiten Authentifizierungsschlüssel, der vom ersten Administrator-Server erzeugt wird;
- wobei der erste Administrator-Server eine Liste von zweiten Authentifizierungsschlüsseln erzeugt und an den zweiten Administrator-Server, dedizierter Server, Paare von Daten überträgt, die von einem Identitätswert eines Abstimmungskandidat-Wählers und von einem Zerhackungswert des zweiten Authentifizierungsschlüssels gebildet werden, der diesem letzteren zugeordnet ist; und
- der zweite Administrator-Server, dedizierter Server, eine Paarung des Zerhackungswerts des zweiten Authentifizierungsschlüssel mit dem ersten Authentifizierungsschlüssel durchführt und einen Zerhackungswert des Authentifizierungsschlüssels berechnet und ein vom Zerhackungswert des ersten und des zweiten Authentifizierungsschlüssels gebildetes Paar an den Stimmenauszählungs-Server überträgt.

**17.** Server nach einem der Ansprüche 11 bis 16, **dadurch gekennzeichnet, dass** der erste Administrator-Server außerdem aufweist:

- Mittel zur Berechnung einer Liste von Authentifizierungs-Zertifikaten, um die Teilnahme an der Abstimmung nur den identifizierten Wählern zu erlauben; und
- Mittel zur Verwaltung einer Widerrufliste der Authentifizierungs-Zertifikate; und
- Mittel zur Übertragung des dem identifizierten Wählerkandidat, der Benutzer dieses Wähler-Endgeräts ist, zugeordneten Authentifizierungs-Zertifikats an das Wähler-Endgerät.

**18.** Stimmenauszählungs-Server einer elektronischen Abstimmung in einem Hochsicherheitsnetzwerk für einen Wähler-Benutzer eines Wähler-Endgeräts, **dadurch gekennzeichnet, dass** er mindestens aufweist:

❖ Empfangs- und Verarbeitungsmittel einer vom Wähler-Endgerät stammenden und mindestens einen von diesem Wähler gewählten elektronischen Stimmzettel und einen anonymen Bezug auf den Wähler-Benutzer enthaltenden Mitteilung,;
❖ Mittel zur Überprüfung bezüglich des wahren Werts des empfangenen anonymen Bezugs;
❖ Mittel zur Validierung des elektronischen Stimmzettels und der elektronischen Abstimmung dieses Wählers und Mittel zur Stimmenauszählung dieses elektronischen Stimmzettels in Abhängigkeit von dessen Nennwert;
❖ Mittel zur Berechnung und zur Übertragung einer Empfangsbestätigungs-Mitteilung an das Wähler-Endgerät.

**19.** Server nach Anspruch 18 oder 10, **dadurch gekennzeichnet, dass** der anonyme Bezug auf den Wähler-Benutzer von einem diesem Wähler dedizierten Einmalpasswort abhängt.

**20.** Server nach Anspruch 18 ode 10, **dadurch gekennzeichnet, dass** die Berechnungs- und Übertragungsmittel einer Empfangsbestätigungs-Mitteilung konfiguriert sind, um ein elektronisches Wahlregister-Dokument zu berechnen und zu übertragen.

*FIG.1a*

A' 
SA ——[CA]——→ Te

SA ——[UPWe]——→ Eu

## FIG.1b

Te $\underline{ReEuTe[IDEu]}$ SA    $A_0$

$A_2$

$A_1$

Retour    ←    − $\vartheta(IDEu) \equiv Vrai$

+

Calcul[CA]
Calcul[UPWe]    $A_3$

## FIG.1c

**FIG.2**

EP 1 612 991 B1

**_FIG.3_**

EP 1 612 991 B1

**FIG.4a**

**FIG.4b**

## RÉFÉRENCES CITÉES DANS LA DESCRIPTION

**Documents brevets cités dans la description**

- US 2003208395 A
- EP 1374188 A
- US 2002138341 A

**Littérature non-brevet citée dans la description**

- **FUJIOK A et al.** A practical secret voting scheme for large scale elections. *Advances in cryptology - Proceedings of the auscrypt workshop on the theory and application of cryptographic techniques,* 1992, 244-251